# EUROPÄISCHE PATENTSCHRIFT

(11) **EP 1 440 827 B1**
(45) Veröffentlichungstag und Bekanntmachung des Hinweises auf die Patenterteilung: **24.01.2007**
(21) Anmeldenummer: 03001568.9
(22) Anmeldetag: 23.01.2003
(51) Int. Cl.: B60H 1/00, H02K 5/00

(54) **Befestigungsvorrichtung für einen Mikromotor**
Micro-motor mounting system
Dispositif de fixation d'un micromoteur

(43) Veröffentlichungstag der Anmeldung: 28.07.2004
(73) Patentinhaber: Frape Behr S.A., 08040 Barcelona (ES); Behr GmbH & Co. KG, 70469 Stuttgart (DE)
(72) Erfinder: Bonjoch, Oriol, 08028 Barcelona (ES); Fuentes, Nicolas, 08859 Begues (ES); Schenkewitz, Werner, 70195 Stuttgart (DE)
(74) Vertreter: Grauel, Andreas

(56) Entgegenhaltungen:
- EP-A- 1 216 862
- DE-A- 2 124 304
- DE-A- 4 306 588
- DE-A- 19 752 258
- DE-U- 8 620 239

## Beschreibung

Die Erfindung betrifft eine Befestigungsvorrichtung für einen Mikromotor, insbesondere für eine Klimaanlage eines Kraftfahrzeugs, gemäß dem Oberbegriff des Anspruchs 1 wie sie z.B. in DE 86202394 offenbart ist.

Für die Befestigung herkömmlicher Mikromotoren, beispielsweise an einem Gehäuse, sind in aller Regel drei Schrauben erforderlich. Die Montage einschließlich der Positionierung des Mikromotors ist relativ aufwendig. Ferner ist die Verwendung von Clips möglich, jedoch werden diese normalerweise im Reparaturfall zerstört, so dass anschließend Schrauben verwendet werden müssen.

Es ist Aufgabe der Erfindung, eine verbesserte Befestigungsvorrichtung zur Verfügung zu stellen.

Diese Aufgabe wird gelöst durch eine Befestigungsvorrichtung für einen Mikromotor, d.h. das Gehäuse des Mikromotors, mit den Merkmalen des Anspruchs 1. Vorteilhafte Ausgestaltungen sind Gegenstand der Unteransprüche.

Erfindungsgemäß ist die Befestigungsvorrichtung mit zwei taschenförmige Aufnahmen versehen, in welche zwei entsprechend ausgestaltete Bereiche des Mikromotors eingeführt und in verschiedene Richtungen den Mikromotor formschlüssig halten. Dies ermöglicht die Einsparung von zwei Schrauben, wodurch die Montage schneller erfolgen kann, verhindert Montagefehler und legt ferner eine eindeutige Montageposition fest.

Dabei ist zumindest eine der taschenförmigen Aufnahmen derart ausgebildet, dass sie eine Schwenkbewegung ermöglicht. Hierfür weist der Mikromotor einen entsprechend ausgebildeten Arm auf, der in seinem äußeren Bereich vorzugsweise oben und unten zwei koaxial angeordnete vorspringende Bereiche aufweist.

Die Befestigungsvorrichtung weist eine Führungsvorrichtung auf. Diese bewirkt eine geführte Schwenkbewegung, so dass eine schnelle und exakte Positionierung des Mikromotors möglich ist.

Nach Positionierung des Mikromotors in den beiden taschenförmigen Aufnahmen ist lediglich ein Freiheitsgrad übrig, vorzugsweise eine Schwenkbewegung um eine durch eine der beiden taschenförmigen Aufnahmen verlaufende Achse, so dass eine sichere Verbindung möglich ist. Die abschließende Fixierung des Mikromotors erfolgt mit einem Befestigungsmittel, vorzugsweise mit einer Schraube, so dass eine lösbare Verbindung gegeben ist, welche einen einfachen Austausch des Mikromotors ermöglicht.

Vorzugsweise ist die Befestigungsvorrichtung direkt in ein Gehäuse integriert, an welchem der Mikromotor befestigt werden soll. Dabei handelt es sich insbesondere um ein Klimaanlagen-Gehäuse, jedoch sind auch beliebige andere Bauteile möglich.

Im Folgenden wird die Erfindung anhand eines Ausführungsbeispiels unter Bezugnahme auf die Zeichnung im Einzelnen erläutert. In der Zeichnung zeigen:
- Fig. 1: eine Draufsicht auf einen Mikromotor und einer erfindungsgemäßen Befestigungsvorrichtung, wobei eine erste Position gestrichelt und eine zweite Position mit durchgezogener Linie dargestellt sind, und
- Fig. 2: einen Schnitt durch einen Bereich von Fig. 1 entlang der Linie II-II.

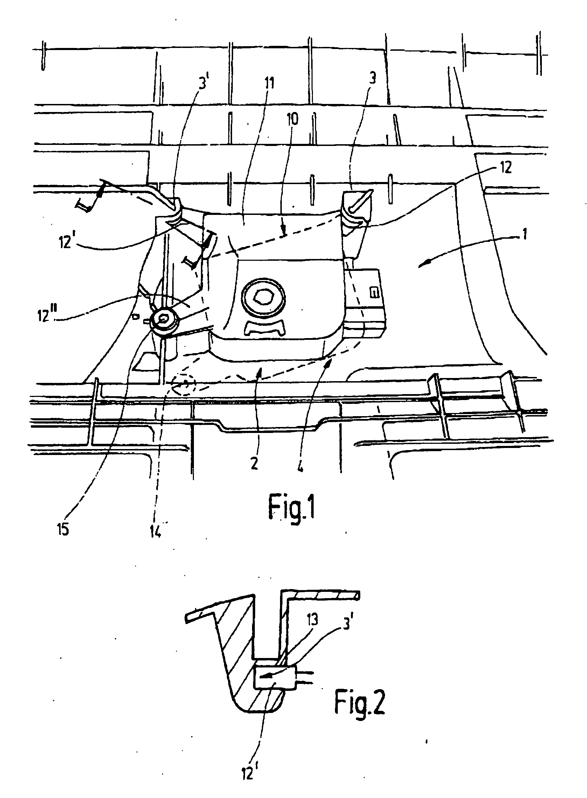

Fig. 1 zeigt einen Ausschnitt eines Klimaanlagen-Gehäuses 1, an dem mittels einer im Folgenden näher beschriebenen Befestigungsvorrichtung 2 ein Mikromotor 10 befestigt ist, der beispielsweise ein Gebläse der Klimaanlage antreibt. Das Klimaanlagen-Gehäuse 1 besteht, zumindest im Bereich der Befestigungsvorrichtung 2, aus Polypropylen (PP).

Die Befestigungsvorrichtung 2 weist zwei taschenförmige Aufnahmen 3, 3' auf, welche mit entsprechend ausgestalteten Bereichen des Gehäuses 11 des Mikromotors 10 zusammenwirken. Diese Bereiche des Gehäuses 11 sind an Armen 12, 12' angeordnet und weisen oben und unten jeweils einen kreisförmigen Vorsprung 13 auf, dessen Abmessungen im Wesentlichen mit den Abmessungen der entsprechenden taschenförmigen Aufnahme 3, 3' übereinstimmt. Ein Schnitt durch eine der taschenförmigen Aufnahmen 3 mit dem entsprechenden Bereich des Gehäuses 11 des Mikromotors 10 ist in Fig. 2 dargestellt.

Das Gehäuse 11 des Mikromotors 10 weist ferner einen dritten Arm 12" auf, welcher mit einer Bohrung 14 versehen ist, durch die im Endzustand eine Schraube 15 ragt, welche in ein in der Befestigungsvorrichtung 2 vorgesehenes Gewinde eingeschraubt ist.

Für die Montage des Mikromotors 10 am Klimaanlagen-Gehäuse 1 wird der erste Arm 12 in der entsprechenden taschenförmigen Aufnahme 3 positioniert, wobei das Ende des ersten Armes 12 im Wesentlichen formschlüssig mit der taschenförmigen Aufnahme 3 zusammenwirkt, jedoch eine Bewegung um eine senkrecht zum ersten Arm 12 angeordnete, durch die taschenförmige Aufnahme 3 verlaufende Achse noch möglich ist. Danach wird der Mikromotor 10 um diese Achse derart verschwenkt, dass der zweite Arm 12' formschlüssig in die entsprechende taschenförmige Aufnahme 3' gelangt. Dabei ist zur Unterstützung und Führung der Schwenkbewegung eine Führungsvorrichtung 4 vorgesehen, welche Teil der Befestigungsvorrichtung 2 ist. Die Führungsvorrichtung 4 wird durch eine entsprechend ausgebildete Fläche oder Rippe gebildet, welche die Höhenpositionierung des Mikromotors 10 festlegt. Anschließend erfolgt die lösbare Fixierung mittels der Schraube 15, welche durch die Bohrung 14 im dritten Arm 12" gesteckt und in das dazugehörende Gewinde der Befestigungsvorrichtung 2 geschraubt wird.

### Bezugszeichenliste

- 1: Klimaanlagen-Gehäuse
- 2: Befestigungsvorrichtung
- 3,: 3' taschenförmige Aufnahme
- 4: Führungsvorrichtung
- 10: Mikromotor
- 11: Gehäuse Mikromotor
- 12, 12', 12": Arm
- 13: Vorsprung
- 14: Bohrung
- 15: Schraube

## Patentansprüche

1. Kraftfahrzeugklimaanlage mit einem Mikromotor (10) und einer Befestigungsvorrichtung (2) für den Mikromotor (10), **dadurch gekennzeichnet, dass** die Befestigungsvorrichtung (2) zwei taschenförmige Aufnahmen (3, 3') aufweist, welche mit entsprechend ausgestalteten Bereichen des Mikromotors (10) zusammenwirken, wobei mindestens eine der taschenförmigen Aufnahmen (3) eine Schwenkbewegung ermöglicht und weiterhin eine Führungsvorrichtung (4) vorgesehen ist und die zwei taschenförmigen Aufnahmen (3, 3') in Zusammenwirkung mit den entsprechenden Bereichen des Mikromotors (10) eine formschlüssige Verbindung mit einem Freiheitsgrad bilden und weiterhin zur Fixierung des Mikromotors (10) ein Befestigungsmittel vorgesehen ist.

2. Kraftfahrzeugklimaanlage nach Anspruch 1, **dadurch gekennzeichnet, dass** die taschenförmigen Aufnahmen (3, 3') mit am Ende abgerundeten Armen (12, 12') des Mikromotors (10) zusammenwirken.

3. Kraftfahrzeugklimaanlage nach einem der vorhergehenden Ansprüche, **dadurch gekennzeichnet, dass** das Befestigungsmittel durch eine Schraube (15) gebildet ist.

4. Kraftfahrzeugklimaanlage nach Anspruch 3, **dadurch gekennzeichnet, dass** die Schraube (15) durch eine entsprechende Bohrung (14) im Gehäuse (11) des Mikromotors (10) ragt und in die mit einem Gewinde versehene Befestigungsvorrichtung (2) geschraubt ist.

5. Kraftfahrzeugklimaanlage nach einem der vorhergehenden Ansprüche, **dadurch gekennzeichnet, dass** die Befestigungsvorrichtung (2) in ein Gehäuse (1) integriert ist.

6. Kraftfahrzeugklimaanlage nach einem der vorhergehenden Ansprüche, **dadurch gekennzeichnet, dass** die Befestigungsvorrichtung (2) Teil eines Klimaanlagen-Gehäuses (1) ist.

7. Kraftfahrzeugklimaanlage nach einem der vorhergehenden Ansprüche, **dadurch gekennzeichnet, dass** die Befestigungsvorrichtung (2) größtenteils aus Polypropylen besteht.

## Claims

1. A motor vehicle air conditioning system having a micro motor (10) and a mounting device (2) for the micro motor (10),
**characterised in that**
the mounting device (2) has two pocket-shaped recesses (3, 3') which co-operate with correspondingly shaped areas of the micro motor (10), at least one of the pocked-shaped recesses (3) permitting a pivoting movement, furthermore a guide device (4) is provided, the two pocket-shaped recesses (3, 3') in co-operation with the corresponding areas of the micro motor (10) forming a positive connection with a degree of freedom, and in addition a mounting means is provided for mounting the micro motor (10).

2. A motor vehicle air conditioning system in accordance with claim 1,
**characterised in that**
the pocket-shaped recesses (3, 3') co-operate with arms (12, 12') of the micro motor (10) which have rounded ends.

3. A motor vehicle air conditioning system in accordance with one of the preceding claims,
**characterised in that**
the mounting means takes the form of a screw (15).

4. A motor vehicle air conditioning system in accordance with claim 3,
**characterised in that**
the screw (15) projects through a corresponding hole (14) in the housing (11) of the micro motor (10) and is screwed into the mounting device (2) which is provided with a thread.

5. A motor vehicle air conditioning system in accordance with one of the preceding claims,
**characterised in that**
the mounting device (2) is integrated into a housing (11).

6. A motor vehicle air conditioning system in accordance with one of the preceding claims,
**characterised in that**
the mounting device (2) is part of an air conditioning system housing (1).

7. A motor vehicle air conditioning system in accordance with one of the preceding claims,
**characterised in that**
the mounting device (2) consists largely of polypropylene.

## Revendications

1. Climatisation d'un véhicule avec un micromoteur (10) et un dispositif de fixation (2) pour ledit micromoteur (10), **caractérisée en ce que** le dispositif de fixation (2) comprend deux récepteurs (3, 3') en forme de poche agissant conjointement avec des secteurs du micromoteur (10) configurés en conséquence, un des récepteurs en forme de poche (3) au moins permettant un pivotement, par ailleurs, **en ce qu'**est prévu un dispositif de guidage (4) et que les deux récepteurs en forme de poche (3, 3') forment en action conjointe avec les secteurs correspondants du micromoteur (10) une liaison par complémentarité de forme avec un degré de liberté, et **en ce qu'**un moyen de fixation est prévu pour fixer ledit micromoteur (10)

2. Climatisation d'un véhicule selon la revendication 1, **caractérisée en ce que** les récepteurs en forme de poche (3, 3') agissent conjointement avec des bras (12, 12') du micromoteur (10) arrondis en leur extrémité.

3. Climatisation d'un véhicule selon l'une quelconque des revendications précédentes, **caractérisée en ce que** le moyen de fixation est une vis (15).

4. Climatisation d'un véhicule selon la revendication 3, **caractérisée en ce que** la vis (15) dépasse dans un alésage (14) prévu dans le bôitier (11) du micromoteur (10) et est visée dans le dispositif de fixation (2) muni d'un filetage.

5. Climatisation d'un véhicule selon l'une quelconque des revendications précédentes, **caractérisée en ce que** le dispositif de fixation (2) est intégré dans un boîtier (1).

6. Climatisation d'un véhicule selon l'une quelconque des revendications précédentes, **caractérisée en ce que** le dispositif de fixation (2) est une partie d'un boîtier (1) d'une climatisation.

7. Climatisation d'un véhicule selon l'une quelconque des revendications précédentes, **caractérisée en ce que** le dispositif de fixation (2) est en majeur partie constitué de polypropylène.
